(19) Europäisches Patentamt
European Patent Office
Office européen des brevets

(11) EP 2 799 839 A1

(12) **EUROPEAN PATENT APPLICATION**
published in accordance with Art. 153(4) EPC

(43) Date of publication:
05.11.2014 Bulletin 2014/45

(51) Int Cl.:
*G01N 21/27* (2006.01)

(21) Application number: 12862888.0

(22) Date of filing: 20.12.2012

(86) International application number:
PCT/JP2012/083159

(87) International publication number:
WO 2013/099779 (04.07.2013 Gazette 2013/27)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 27.12.2011 JP 2011287000

(71) Applicant: Nabtesco Corporation
Tokyo 102-0093 (JP)

(72) Inventors:
• NAKAMURA Koji
Tsu-shi
Mie 514-8533 (JP)
• SHIMADA Hideshi
Tsu-shi
Mie 514-8533 (JP)

(74) Representative: Grünecker, Kinkeldey,
Stockmair & Schwanhäusser
Leopoldstrasse 4
80802 München (DE)

(54) **MACHINE PROVIDED WITH LUBRICATING OIL DETERIORATION SENSOR AND INDUSTRIAL ROBOT**

(57) A machine configured to detect deterioration of lubricant is provided. The machine includes a lubricant deterioration sensor which is mounted in a machine body and configured to detect deterioration of the lubricant. The lubricant deterioration sensor includes a light emitting element, a color light reception element which is configured to detect color of received light, and a gap forming member forming an oil gap being a gap in which the lubricant enters. The gap forming member transmits the light emitted from the light emitting element. The oil gap is disposed on an optical path from the light emitting element to the color light reception element. The lubricant does not contain molybdenum as additive.

*Fig. 4*

**Description**

Technical Field

The present invention relates to a machine provided with a lubricant deterioration sensor for detecting the deterioration of lubricant.

Background Art

Conventionally, as a lubricant deterioration sensor for detecting the deterioration of lubricant of a machine, an oil deterioration degree sensor has been known. In this sensor, an oil entering gap portion for entering lubricant therein is formed on an optical path from an infrared LED (Light Emitting Diode) to a photo diode. Then, an amount of light absorption by the lubricant within the oil entering gap portion with respect to light emitted from the infrared LED is measured according to a light reception amount of the photo diode, to thereby determine a deterioration degree of the lubricant related to the light absorption amount thus measured (see patent literatures 1 and 2, for example).

However, the oil deterioration degree sensor described in each of the patent literatures 1 and 2 has a problem that, although a density of insoluble content within the lubricant can be measured as the deterioration degree of the lubricant, kinds of contaminant within the lubricant can not be specified.

As a technique of specifying the kinds of contaminant within lubricant, a technique has been known in which an LED irradiates light toward a membrane filter having been used to filter the lubricant. Then, a light reception element converts reflection light from the contaminant on the membrane filter into digital values of RGB, to thereby specify the kinds of contaminant within the lubricant based on the RGB digital values thus converted (see non-patent literatures 1 and 2, for example).

As the lubricant for a machine, there is known one in which organic molybdenum (Mo) such as molybdenum dithiocarbamate (MoDTC) or molybdenum dithiophosphate (MoDTP) is added as friction reducing agent for reducing the friction of the friction surface of the machine (see patent literatures 3 and 4, for example).

Citation List

Patent Literature

    Patent Literature 1: JP-A-7-146233
    Patent Literature 2: JP-A-10-104160
    Patent Literature 3: JP-A-2004-339411
    Patent Literature 4: JP-A-2010-24355

Non-Patent Literature

    Non-Patent Literature 1: Tomohiko Yamaguchi and four others, "METHOD OF DISCRIMINATING HUE OF CONTAMINANT WITHIN LUBRICANT", Fukui University, Faculty of Engineering, Research Report, March 2003, Volume 51, No. 1, pp. 81 - 81
    Non-Patent Literature 2: Tomonori Honda, "DETERIORATION DIAGNOSIS OF LUBRICANT INSPECTION TECHNOLOGY", Journal of Japan Society for Precision Engineering, 2009, Volume 75, No. 3, pp. 359 - 362

Summary of Invention

Technical Problem

Accordingly, an object of this invention is to provide a machine which can suppress the degradation of performance of a lubricant deterioration sensor that can immediately specify the kinds and amounts of contaminant within lubricant.

Solution to Problem

According to this invention, there is provided with a machine which is configured to detect deterioration of lubricant, including:

a machine body;
lubricant for reducing friction generated at a movable portion of the machine body; and
a lubricant deterioration sensor which is mounted in the machine body and configured to detect deterioration of the lubricant,

wherein the lubricant deterioration sensor includes:

a light emitting element configured to emit light;
a color light reception element configured to detect color of received light; and
a gap forming member forming an oil gap being a gap in which the lubricant enters,

wherein the gap forming member transmits the light emitted from the light emitting element,
wherein the oil gap is disposed on an optical path from the light emitting element to the color light reception element, and
wherein the lubricant does not contain molybdenum as additive.

The lubricant deterioration sensor may further includes a supporting member which supports the light emitting element, the color light reception element and the gap forming member, and a fixing member to be fixed to the machine body. The fixing member may support the supporting member so as to be rotatable so that a direction of an opening of the oil gap changes when the supporting member rotates.

The supporting member may be provided with a rotational driving force receiving portion which is a portion for receiving a rotational driving force with respect to the supporting member from outside by a contact force, at a position where the rotational driving force receiving portion does not contact with the lubricant in a state where the fixing member is fixed to the machine body.

The lubricant deterioration sensor may further include a rotation preventing member preventing a rotation of the supporting member with respect to the fixing member by contacting with both the supporting member and the fixing member. The rotation preventing member may include a contact driving force receiving portion which is a portion for receiving a driving force for contacting with both the supporting member and the fixing member from outside by a contact force, at a position where the contact driving force receiving portion does not contact with the lubricant in a state where the fixing member is fixed to the machine body.

The light emitting element may be a white LED which emits white light.

The gap forming member may have a reflection surface for bending the optical path.

The gap forming member may include two right-angle prisms each provided with the reflection surface for bending the optical path by 90 degrees, whereby the optical path is bent by 180 degrees by the reflection surfaces of the two right-angle prisms. The oil gap may be formed between the two right-angle prisms.

The supporting member may have an optical path surrounding portion which surrounds at least a part of the optical path, and the optical path surrounding portion may have a surface which is treated to a treatment for preventing light reflection.

The surface of the gap forming member forming the oil gap may be treated to an oil repelling treatment.

The machine may be an industrial robot,
the machine body may include an arm and a reducer used at an articular portion of the arm, and
the lubricant may be lubricant for the reducer.

Advantageous Effects of Invention

In the lubricant deterioration sensor for the machine according to this invention, the color light reception element detects colors with respect to the light having wavelengths not absorbed by the contaminant such as ion powder within the lubricant at the oil gap among the light emitted by the light emitting element. Thus, colors of the contaminant within the lubricant can be detected immediately. That is, the lubricant deterioration sensor for the machine according to this invention can immediately specify the kinds and amounts of the contaminant within the lubricant based on the colors detected by the color light reception element.

Further, in the machine according to this invention, since the lubricant does not contain molybdenum as additive, molybdenum can be prevented from adhering to the gap forming member as sludge. Thus, the machine according to this invention can suppress the generation of the adherence of the sludge to the gap forming member and hence the degradation of the performance of the lubricant deterioration sensor can be suppressed.

As a result, the machine according to this invention can prevent the degradation of the performance of the lubricant deterioration sensor which can immediately specify the kinds and amounts of the contaminant within the lubricant.

In the machine according to this invention, in a case where the fixing member is fixed to the machine body, the direction of the opening of the oil gap in a state where the fixing member is fixed to the machine body can be adjusted so that the detection accuracy of the deterioration of the lubricant by the lubricant deterioration sensor becomes high.

In the machine according to this invention, after the fixing member is fixed to the machine body, the direction of the opening of the oil gap in the state where the fixing member is fixed to the machine body can be adjusted so that the detection accuracy of the deterioration of the lubricant by the lubricant deterioration sensor becomes high.

In the machine according to this invention, after the fixing member is fixed to the machine body, the direction of the opening of the oil gap in the state where the fixing member is fixed to the machine body can be fixed so that the detection accuracy of the deterioration of the lubricant by the lubricant deterioration sensor becomes high.

In the machine according to this invention, the lubricant deterioration sensor can be miniaturized as compared with a configuration where the light emitting element is a lamp other than an LED, for example. Thus, the machine according to this invention can be miniaturized.

In the machine according to this invention, as compared with a configuration where the optical path from the light emitting element to the color light reception element is straight, the lubricant deterioration sensor can be miniaturized by disposing the light emitting element and the color light reception element close to each other. Further, the gap forming member has a function of bending the optical path as well as a function of forming the oil gap. Thus, the number of the components of the lubricant deterioration sensor can be reduced as compared with a configuration where a member for bending the optical path is separately provided in place of the gap forming member. Thus, the machine according to this invention can be miniaturized and further reduce the number of the components.

In the machine according to this invention, the lubricant deterioration sensor can be miniaturized with a simple configuration having a small number of the components. Thus, the machine according to this invention can be miniaturized with a simple configuration having a small number of the components.

In the machine according to this invention, the color light reception element is prevented from receiving unnecessary reflection light. Thus, the detection accuracy of the colors of the contaminant within the lubricant by the lubricant deterioration sensor can be improved as compared with a configuration where the color light reception element receives unnecessary reflection light. Thus, the machine according to this invention can improve the prediction accuracy of a failure.

Since the machine according to this invention is configured to easily flow the lubricant through the oil gap, the detection accuracy of the colors of the contaminant within the lubricant by the lubricant deterioration sensor can be improved as compared with a configuration where the lubricant likely remains at the oil gap. Further, in the machine according to this invention, when the surface forming the oil gap is treated to the oil repelling treatment, dirt is unlikely adhered to the surface forming the oil gap. Thus, the degradation of the detection accuracy of the colors of the contaminant within the lubricant by the lubricant deterioration sensor due to the adhesion of dirt can be suppressed. Thus, the machine according to this invention can improve the prediction accuracy of a failure.

The industrial robot according to this invention can prevent the degradation of the performance of the lubricant deterioration sensor which can immediately specify the kinds and amounts of the contaminant within the lubricant. Thus, the industrial robot according to this invention can predict an immediate failure for a long time.

It is possible to suppress the degradation of performance of the lubricant deterioration sensor which can immediately specify the kinds and amounts of the contaminant within the lubricant.

Brief Description of Drawings

[Fig. 1] Fig. 1 is a side view of an industrial robot according to an embodiment of this invention.
[Fig. 2] Fig. 2 is a sectional view of the articular portion of the industrial robot shown in Fig. 1.
[Fig. 3] Fig. 3 is a front view of a lubricant deterioration sensor shown in Fig. 2.
[Fig. 4] Fig. 4 is a front sectional view of the lubricant deterioration sensor shown in Fig. 3 in an attached state to an arm.
[Fig. 5] Fig. 5(a) is a plan view of the lubricant deterioration sensor shown in Fig. 3. Fig. 5(b) is a bottom view of the lubricant deterioration sensor shown in Fig. 3.
[Fig. 6] Fig. 6(a) is a front view of a housing shown in Fig. 3. Fig. 6(b) is a front sectional view of the housing shown in Fig. 3.
[Fig. 7] Fig. 7(a) is a side view of the housing shown in Fig. 3. Fig. 7(b) is a side sectional view of the housing shown in Fig. 3.
[Fig. 8] Fig. 8(a) is a plan view of the housing shown in Fig. 3. Fig. 8(b) is a bottom view of the housing shown in Fig. 3.
[Fig. 9] Fig. 9(a) is a front view of a holder shown in Fig. 3. Fig. 9(b) is a front sectional view of the holder shown in Fig. 3.

[Fig. 10] Fig. 10(a) is a side view of the holder shown in Fig. 3. Fig. 10(b) is a side sectional view of the holder shown in Fig. 3.

[Fig. 11] Fig. 11 (a) is a plan view of the holder shown in Fig. 3. Fig. 11 (b) is a bottom view of the holder shown in Fig. 3.

[Fig. 12] Fig. 12 is a diagram showing an optical path from a white LED to an RGB sensor shown in Fig. 4.

[Fig. 13] Fig. 13(a) is a front view of a holder cap shown in Fig. 3. Fig. 13(b) is a front sectional view of the holder cap shown in Fig. 3.

[Fig. 14] Fig. 14(a) is a plan view of the holder cap shown in Fig. 3. Fig. 14(b) is a bottom view of the holder cap shown in Fig. 3.

[Fig. 15] Fig. 15 is a diagram showing an example of the relation between the direction of the opening of an oil gap shown in Fig. 3 with respect to the flow of lubricant and a color difference ΔE of colors detected by the RGB sensor with respect to black.

[Fig. 16] Fig. 16(a) is a diagram showing a state that the direction of the opening of the oil gap shown in Fig. 3 with respect to the flow of the lubricant is 0 degree. Fig. 16(b) is a diagram showing a state that the direction of the opening of the oil gap shown in Fig. 3 with respect to the flow of the lubricant is 45 degrees. Fig. 16(c) is a diagram showing a state that the direction of the opening of the oil gap shown in Fig. 3 with respect to the flow of the lubricant is 90 degrees.

[Fig. 17] Fig. 17(a) is a table showing the experimentation result of the chronological change of the color difference ΔE in a case where the lubricant shown in Fig. 2 contains molybdenum as additive. Fig. 17(b) is a graph of the experimentation result shown in Fig. 17(a).

[Fig. 18] Fig. 18(a) is a table showing the experimentation result of the chronological change of the color difference ΔE in a case where the lubricant shown in Fig. 2 does not contain molybdenum as additive. Fig. 18(b) is a graph of the experimentation result shown in Fig. 18(a).

Description of Embodiments

Since the technique described in each of the non-patent literatures 1 and 2 requires to drain lubricant from a machine and filter the lubricant by a membrane filter, there arises a problem of lacking immediacy.

In view of this, the inventors of the present application have developed a lubricant deterioration sensor which can immediately specify the kinds and amounts of contaminant within the lubricant of a machine. This lubricant deterioration sensor (hereinafter referred to as a "new sensor") is a lubricant deterioration sensor which is mounted in a machine and detects the deterioration of the lubricant of the machine. This sensor includes a light emitting element which emits light, a color light reception element which detects color of received light, and a gap forming member at which an oil gap as a gap for entering the lubricant therein is formed, wherein the gap forming member transmits the light emitted from the light emitting element, and the oil gap is disposed on an optical path from the light emitting element to the color light reception element.

However, the inventors of the present application have found that when the new sensor is continuously mounted and used in the machine, the accuracy of the new sensor for specifying the kinds and amounts of contaminant within the lubricant degrades, that is, the performance of the new sensor degrades.

Then, the inventors of the present application have investigated a cause of the degradation of the performance of the new sensor. As a result of the investigation, the inventors of the present application have ascertained that the degradation of the performance of the new sensor is caused by a fact that sludge (sediment) generated by the deterioration of the lubricant adheres to the gap forming member.

Thus, the inventors of the present application have analyzed the sludge adhered to the gap forming member in order to ascertain the cause of the generation of the sludge. As a result, the inventors of the present application have ascertained that molybdenum (Mo) is contained in the sludge adhered to the gap forming member.

Then, in order to investigate whether or not molybdenum contained in the lubricant as additive is a cause of the degradation of the performance of the new sensor, the inventors of the present application have performed comparative experimentation as to the degradation of the performance of the new sensor between the lubricant containing molybdenum as the additive and the lubricant not containing molybdenum as the additive. As a result, the inventors of the present application have concluded that molybdenum contained in the lubricant as the additive is at least one cause of the degradation of the performance of the new sensor.

Accordingly, an object of this invention is to provide a machine which can suppress the degradation of performance of a lubricant deterioration sensor that can immediately specify the kinds and amounts of contaminant within lubricant.

Hereinafter, an embodiment of this invention will be explained with reference to drawings.

First, the configuration of an industrial robot as a machine according to this embodiment will be explained.

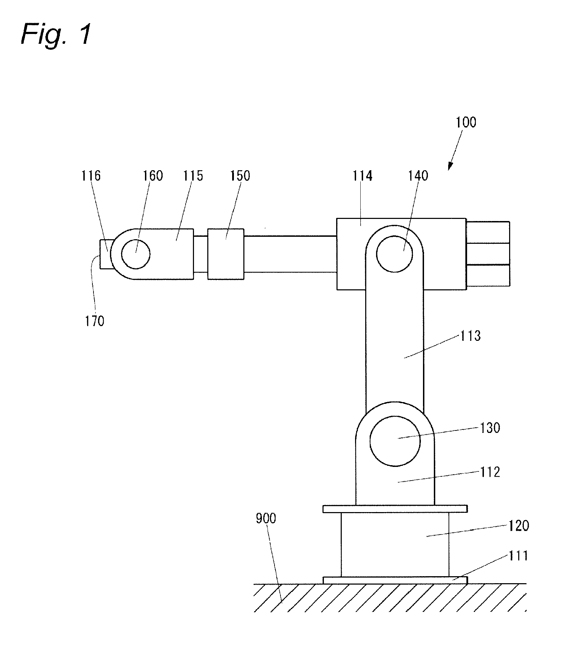

Fig. 1 is a side view of the industrial robot 100 according to this embodiment.

As shown in Fig. 1, the industrial robot 100 includes an attachment portion 111 to be attached to a placing portion 900 such as a floor or a ceiling, arms 112 to 116, an articular portion 120 for connecting between the attachment portion 111 and the arm 112, an articular portion 130 for connecting between the arm 112 and an arm 113, an articular portion 140 for connecting between the arm 113 and an arm 114, an articular portion 150 for connecting between the arm 114 and an arm 115, an articular portion 160 for connecting between the arm 115 and an arm 116, and an articular portion 170 for connecting between the arm 116 and a not-shown hand.

Of the industrial robot 100, portions except for lubricant 131 a and the lubricant deterioration sensors such as lubricant deterioration sensors 137a, 137b, 139a, 139b described later constitute a machine body according to this invention.

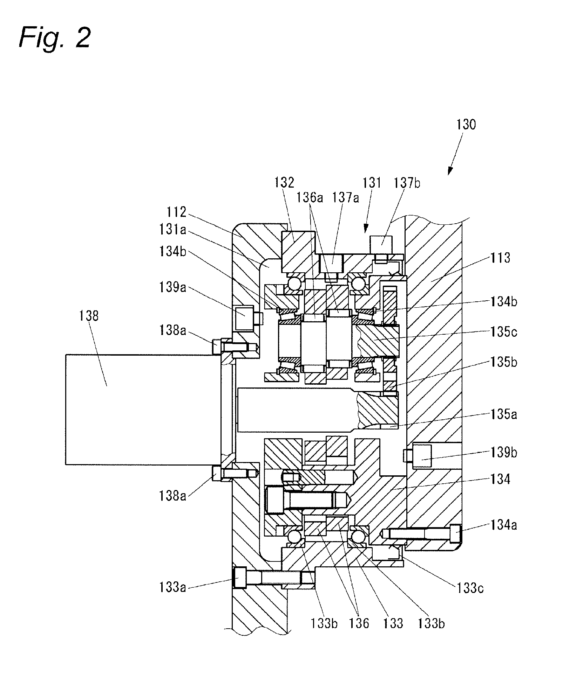

Fig. 2 is a sectional view of the articular portion 130. Hereinafter, although the explanation is made as to the articular portion 130, the operation of each of the articular portions 120 and 140 to 170 is substantially same.

As shown in Fig. 2, the articular portion 130 includes a reducer 131 for connecting between the arm 112 and the arm 113, a motor 138 fixed to the arm 112 by means of bolts 138a, and the lubricant deterioration sensors 139a, 139b each for detecting the deterioration of the lubricant 131 a for reducing friction generated at the movable portions of the reducer 131.

The reducer 131 includes a reducer body 132 and the lubricant deterioration sensors 137a and 137b each for detecting the deterioration of the lubricant 131 a of the reducer body 132.

The reducer body 132 includes a case 133 fixed to the arm 112 by means of bolts 133a, a supporting body 134 fixed to the arm 113 by means of bolts 134a, a gear 135a fixed to the output shaft of the motor 138, three gears 135b which are disposed around the center axis of the reducer 131 with a constant interval therebetween and mesh with the gear 135a, three crank shafts 135c which are disposed around the center axis of the reducer 131 with a constant interval therebetween and fixed to the gears 135b, respectively, and two external gears 136 which mesh with internal gears provided at the case 133.

The supporting body 134 is rotatably supported by the case 133 via bearings 133b. A seal member 133c for preventing leakage of the lubricant 131 a is provided between the case 133 and the supporting body 134.

Each of the crank shafts 135c is rotatably supported by the supporting body 134 via bearings 134b and further rotatably supported by the external gears 136 via bearings 136a.

Each of the lubricant deterioration sensor 137a and the lubricant deterioration sensor 137b is fixed to the case 133. The lubricant deterioration sensor 139a is fixed to the arm 112. The lubricant deterioration sensor 139b is fixed to the arm 113.

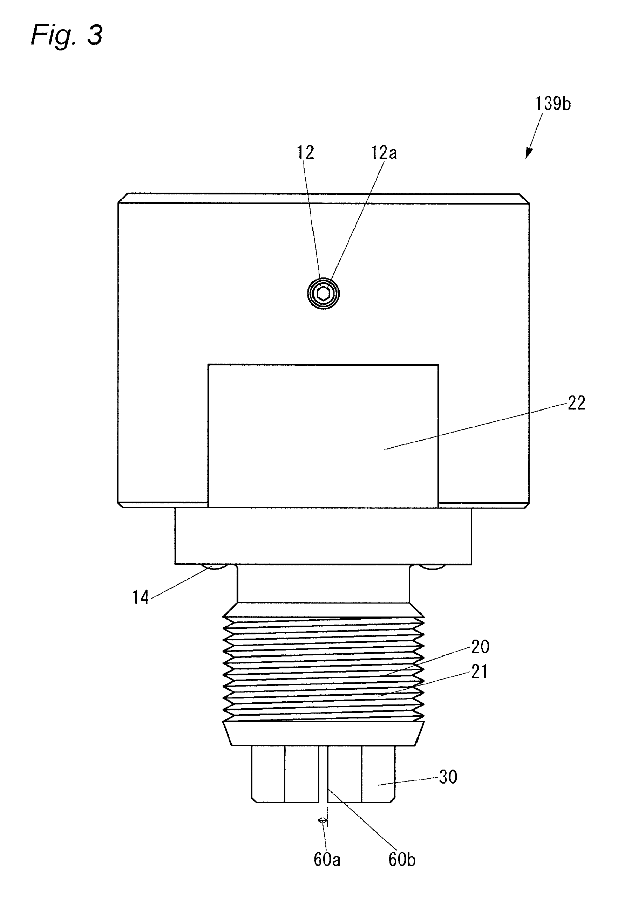

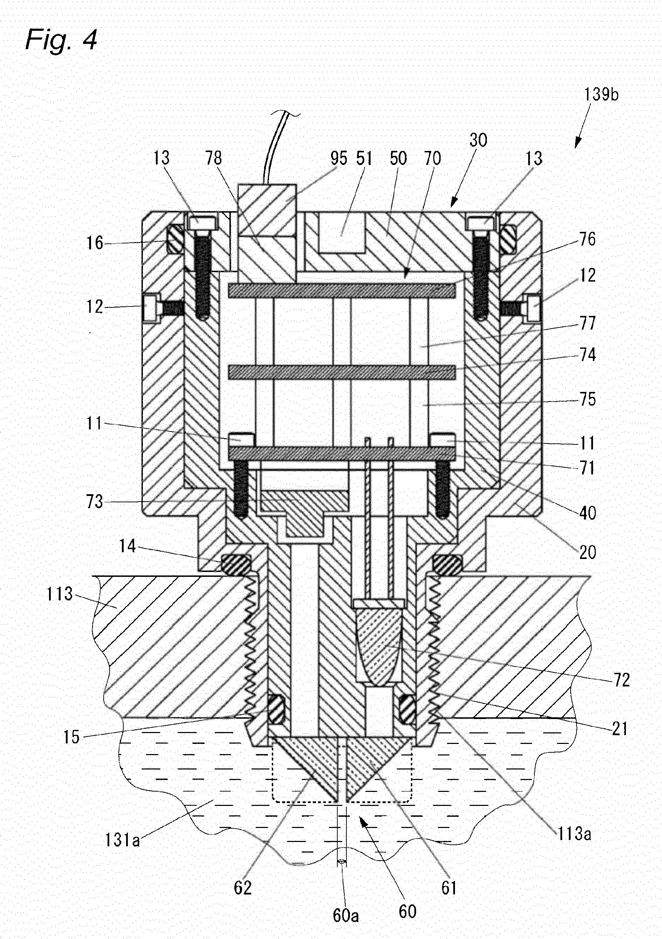

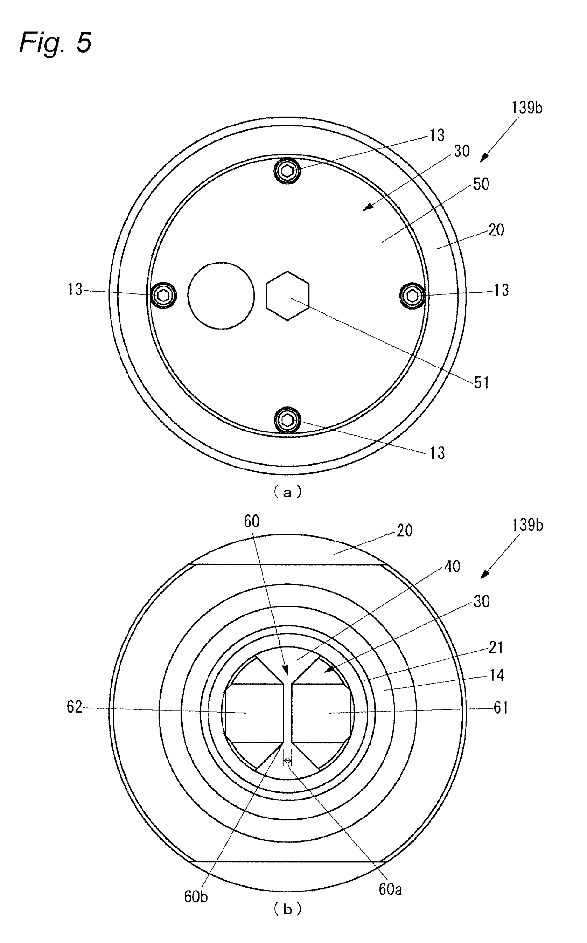

Fig. 3 is a front view of the lubricant deterioration sensor 139b. Fig. 4 is a front sectional view of the lubricant deterioration sensor 139b in an attached state to the arm 113. Fig. 5(a) is a plan view of the lubricant deterioration sensor 139b. Fig. 5(b) is a bottom view of the lubricant deterioration sensor 139b. Although the explanation is made hereinafter as to the lubricant deterioration sensor 139b, the configuration of each of the lubricant deterioration sensors such as the lubricant deterioration sensors 137a, 137b, 139a other than the lubricant deterioration sensor 139b is substantially same.

As shown in Figs. 3 to 5, the lubricant deterioration sensor 139b includes a housing 20 made of aluminum alloy for supporting the respective components of the lubricant deterioration sensor 139b, a supporting member 30 for supporting a white LED 72, an RGB sensor 73 and a gap forming member 60 described later, the gap forming member 60 held by the supporting member 30, and an electronic component group 70 having the white LED 72 and the RGB sensor 73.

The supporting member 30 is fixed to the housing 20 by means of bolts 12 with hexagon holes. The supporting member 30 includes a holder 40 made of aluminum alloy, and a holder cap 50 made of aluminum alloy which is fixed to the holder 40 by means of bolts 13 with hexagon holes.

The gap forming member 60 is constituted by two right-angle prisms 61, 62 made of glass. An oil gap 60a as a gap for entering the lubricant 131 a therein is formed between the two right-angle prisms 61, 62.

The electronic component group 70 includes a circuit board 71 fixed to the supporting member 30 by means of screws 11, the white LED 72 mounted on the circuit board 71, the RGB sensor 73 mounted on the circuit board 71, a circuit board 74 disposed at one surface side of the circuit board 71 opposing to the white LED 72 and RGB sensor 73 side thereof, a plurality of pillars 75 for fixing the circuit board 71 and the circuit board 74, a circuit board 76 disposed on the opposite surface side of the circuit board 71 with respect to the circuit board 74, a plurality of pillars 77 for fixing the circuit board 74 and the circuit board 76, and a connector 78 mounted on one surface side of the circuit board 76 opposing to the circuit board 74 side thereof. A plurality of electronic components are mounted on each of the circuit board 71, the circuit board 74 and the circuit board 76. The circuit board 71, the circuit board 74 and the circuit board 76 are mutually connected electrically.

The lubricant deterioration sensor 139b includes an O ring 14 for preventing the leakage of the lubricant 131 a from a gap between the housing 20 and the arm 113, an O ring 15 for preventing the leakage of the lubricant 131 a from a gap between the housing 20 and the holder 40, and an O ring 16 disposed between the housing 20 and the holder cap 50.

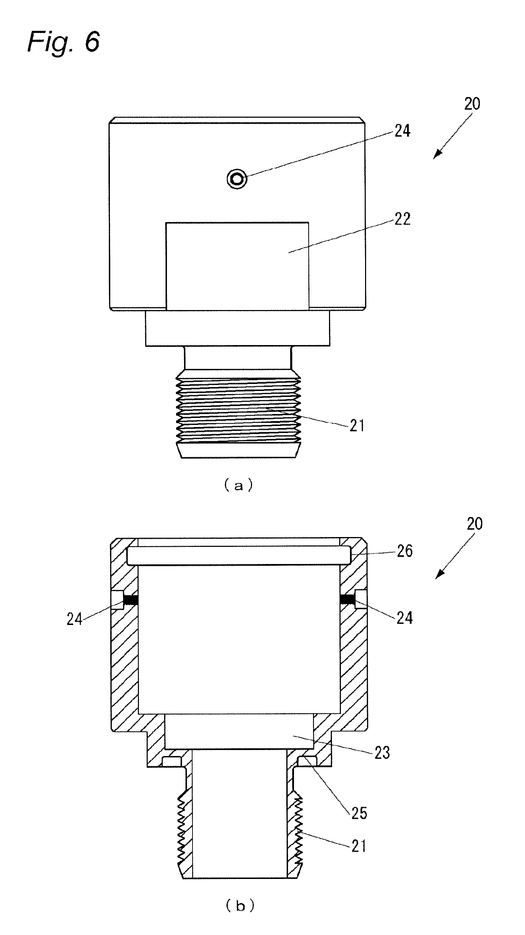

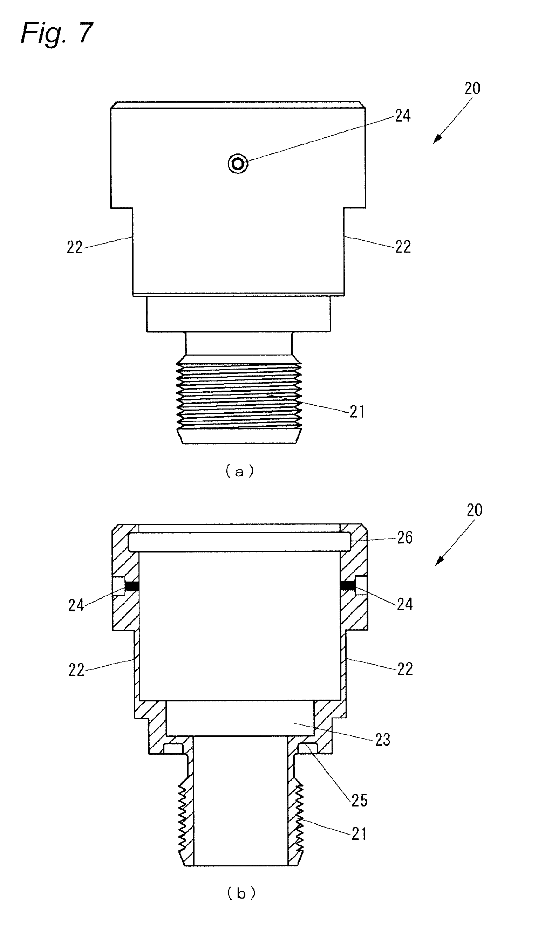

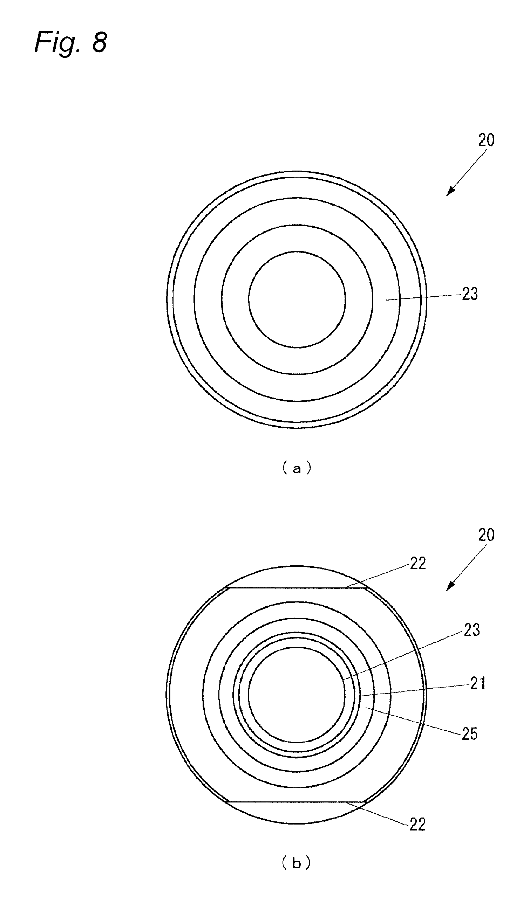

Fig. 6(a) is a front view of the housing 20. Fig. 6(b) is a front sectional view of the housing 20. Fig. 7(a) is a side view of the housing 20. Fig. 7(b) is a side sectional view of the housing 20. Fig. 8(a) is a plan view of the housing 20. Fig. 8(b) is a bottom view of the housing 20.

As shown in Figs. 3 to 8, the housing 20 includes a screw portion 21 to be fixed to the screw hole 113a of the arm 113, a tool contact portion 22 which is grasped by a tool such as a wrench at the time of rotating the screw portion 21 with respect to the screw hole 113a of the arm 113, and a holder housing portion 23 in which the holder 40 is housed. Further, the housing 20 is provided with screw holes 24 into which the bolts 12 with hexagon holes are respectively screwed, a groove 25 into which the O ring 14 is fit, and a groove 26 into which the O ring 16 is fit. The housing 20 is configured to be fixed to the arm 113 of the industrial robot 100, that is, the machine body and hence constitutes a fixing member of this invention.

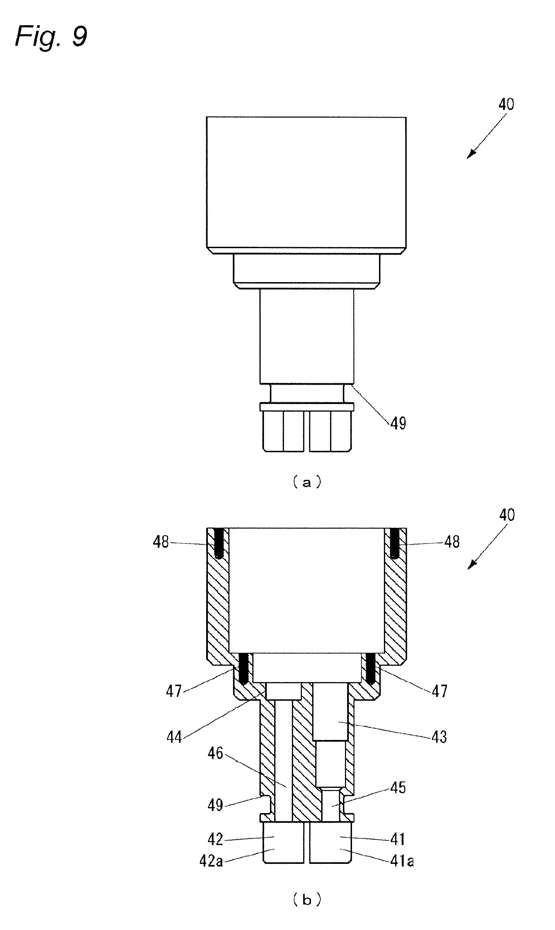

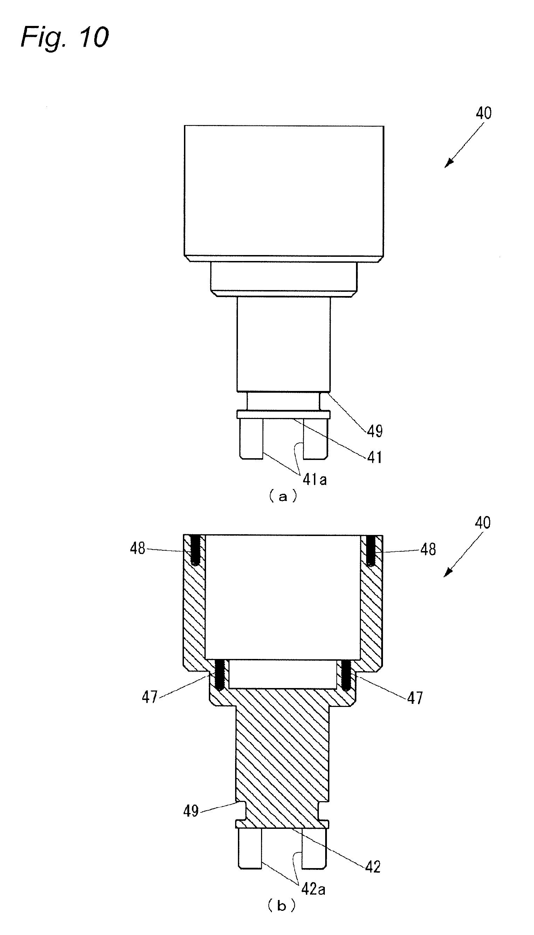

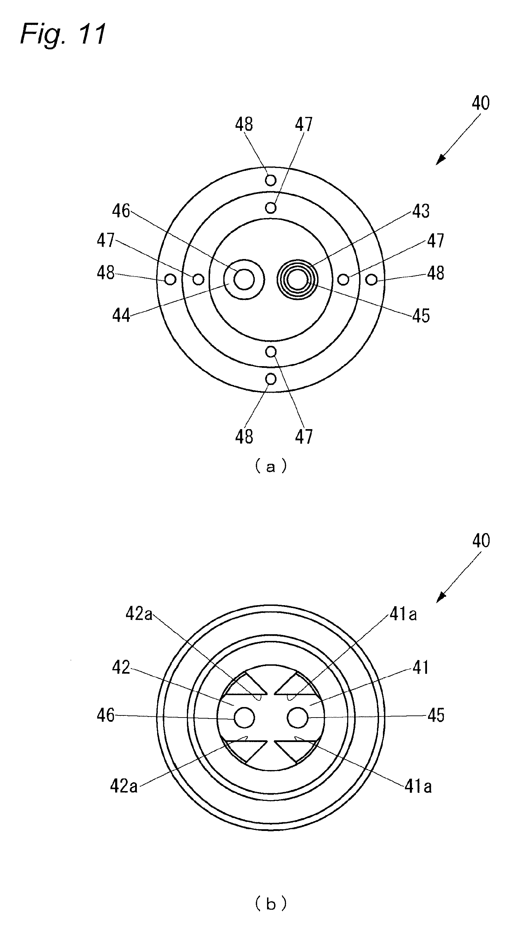

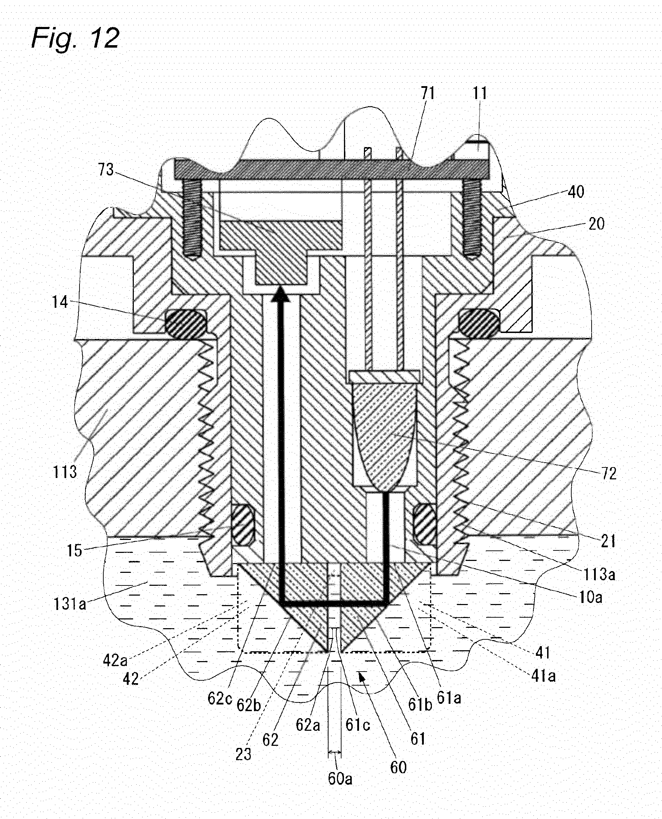

Fig. 9(a) is a front view of the holder 40. Fig. 9(b) is a front sectional view of the holder 40. Fig. 10(a) is a side view of the holder 40. Fig. 10(b) is a side sectional view of the holder 40. Fig. 11 (a) is a plan view of the holder 40. Fig. 11(b) is a bottom view of the holder 40. Fig. 12 is a diagram showing an optical path 10a from the white LED 72 to the RGB sensor 73.

As shown in Figs.3 to 5 and Figs. 9 to 12, the holder 40 includes a prism housing portion 41 for housing the right-angle prism 61, a prism housing portion 42 for housing the right-angle prism 62, an LED housing portion 43 for housing the white LED 72, and an RGB sensor housing portion 44 for housing the RGB sensor 73. Further, the holder 40 is provided with a hole 45 penetrating the prism housing portion 41 and the LED housing portion 43, a hole 46 penetrating the prism housing portion 42 and the RGB sensor housing portion 44, screw holes 47 in which the screws 11 are threaded, screw holes 48 in which the bolts 13 with hexagon holes are threaded, and a groove 49 in which the O ring 15 is fitted.

The prism housing portion 41 includes two walls 41 a sandwiching the right-angle prism 61 therebetween. The right-angle prism 61 is fixed to the walls 41 a by means of adhesive. The prism housing portion 42 includes two walls 42a sandwiching the right-angle prism 62 therebetween. The right-angle prism 62 is fixed to the walls 42a by means of adhesive.

The holder 40 surrounds at least a part of the optical path 10a from the white LED 72 to the RGB sensor 73 by means of the LED housing portion 43, the hole 45, the prism housing portion 41, the prism housing portion 42, the hole 46 and the RGB sensor housing portion 44, thereby constituting an optical path surrounding portion according to this invention.

The surface of the holder 40 is treated to a treatment for preventing light reflection such as a black alumite treatment for matting.

The holder 40 supports the white LED 72 and the RGB sensor 73 via the circuit board 71. Further, the holder 40 directly supports the gap forming member 60.

As shown in Fig. 12, the oil gap 60a of the gap forming member 60 is disposed on the optical path 10a from the white LED 72 to the RGB sensor 73.

The right-angle prisms 61, 62 transmit light emitted from the white LED 72. The right-angle prism 61 is provided with a light incident surface 61a on which light emitted from the white LED 72 is made incident, a light reflection surface 61 b which reflects the light entered from the light incident surface 61 a in a manner of bending the propagation direction of the light by 90 degrees, and a light emission surface 61c which emits the light reflected by the light reflection surface 61b. The right-angle prism 62 is provided with a light incident surface 62a on which light emitted from the light emission surface 61 c of the right-angle prism 61 is made incident, a light reflection surface 62b which reflects the light entered from the light incident surface 62a in a manner of bending the propagation direction of the light by 90 degrees, and a light emission surface 62c which emits the light reflected by the light reflection surface 62b.

Each of the light incident surface 61 a, the light reflection surface 61b and the light emission surface 61 c of the right-angle prism 61 and the light incident surface 62a, the light reflection surface 62b and the light emission surface 62c of the right-angle prism 62 is optically polished. Further, each of the light reflection surface 61b of the right-angle prism 61 and the light reflection surface 62b of the right-angle prism 62 is provided with an aluminum deposition film. Furthermore, an SiO2 film is formed on the aluminum deposition film in order to protect the aluminum deposition film which is low in a degree of hardness and an adhesive force.

The optical path 10a is bent by 90 degrees by the light reflection surface 61 b of the right-angle prism 61 and also bent by 90 degrees by the light reflection surface 62b of the right-angle prism 62. That is, the optical path 10a is bent by 180 degrees by the gap forming member 60.

When the length of the oil gap 60a is too short, since the contaminant within the lubricant 131 a unlikely flows suitably through the gap 60a, the detection accuracy of the colors of the contaminant within the lubricant 131 a degrades. On the other hand, when the length of the oil gap 60a is too long, the light emitted from the white LED 72 is excessively absorbed by the contaminant within the lubricant 131a within the oil gap 60a and hence unlikely reaches the RGB sensor 73. Thus, the detection accuracy of the colors of the contaminant within the lubricant 131a also degrades. Accordingly, preferably, the length of the oil gap 60a is set suitably so that the detection accuracy of the colors of the contaminant within the lubricant 131 a becomes high. A distance between the light emission surface 61 c of the right-angle prism 61 and the light incident surface 62a of the right-angle prism 62, that is, the length of the oil gap 60a is 1 mm, for example.

The white LED 72 is an electronic component which emits white light and constitutes a light emitting element according to this invention. As the white LED 72, NSPW500GS-K1 manufactured by Nichia Corporation, for example, may be employed.

The RGB sensor 73 is an electronic component which detects the colors of the received light and constitutes a color light reception element according to this invention. As the RGB sensor 73, S9032-02 manufactured by Hamamatsu Photonics K.K., for example, may be employed.

As shown in Fig. 4, the connector 78 is configured in a manner that the connector 95 of the external device at the outside of the lubricant deterioration sensor 139b is connected thereto so as to be supplied with electric power via the connector 95 from the external device, and the detection result of the lubricant deterioration sensor 139b is outputted as an electric signal to the external device via the connector 95.

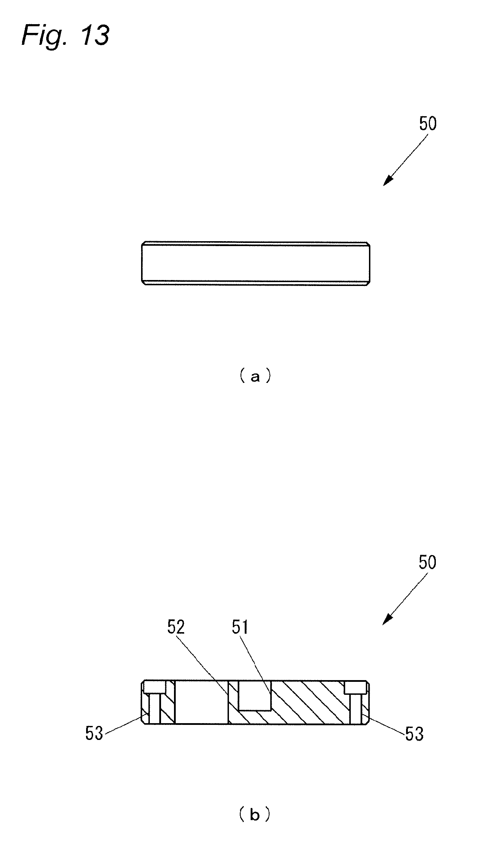

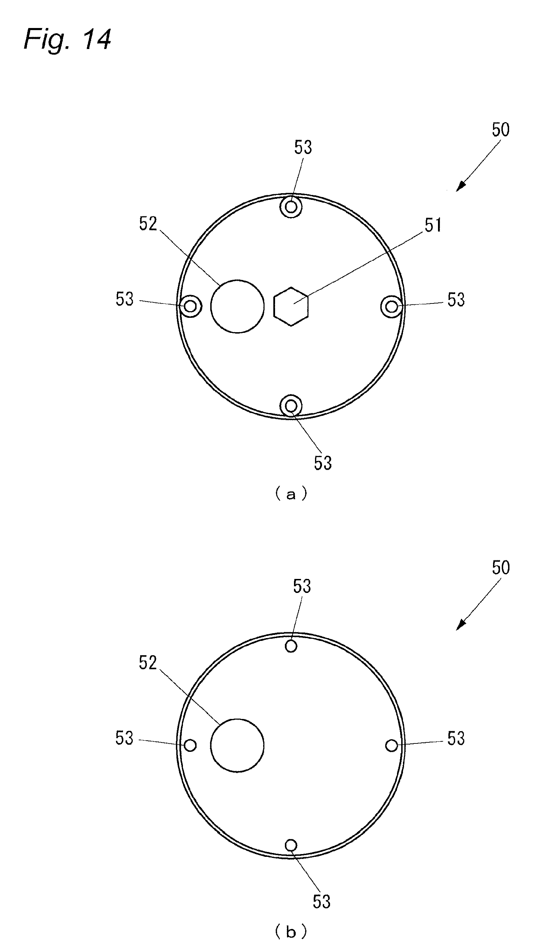

Fig. 13(a) is a front view of the holder cap 50. Fig. 13(b) is a front sectional view of the holder cap 50. Fig. 14(a) is a plan view of the holder cap 50. Fig. 14(b) is a bottom view of the holder cap 50.

As shown in Figs. 3 to 5 and Figs. 13 to 14, the holder cap 50 is provided with a tool contact portion 51 for contacting with a tool such as a hexagonal wrench at the time of rotating the supporting member 30 with respect to the housing 20. The tool contact portion 51 is a portion for receiving a rotational driving force of the supporting member 30 with respect to the housing 20 from the outside by a contact force, and constitutes a rotational driving force receiving portion according to this invention. The tool contact portion 51 is disposed at a position not contacting with the lubricant 131 a when the housing 20 is fixed to the arm 113. Further, the holder cap 50 is provided with a hole 52 in which the connector 78 is inserted and holes 53 in which the bolts 13 with hexagon holes are inserted.

The surface of the holder cap 50 is treated to the treatment for preventing light reflection such as the black alumite treatment for matting.

As shown in Figs. 3 and 4, the bolts 12 with hexagon holes are configured so as to prevent the rotation of the supporting member 30 with respect to the housing 20 by contacting with both the supporting member 30 and the housing 20, and constitutes a rotation preventing member according to this invention. The bolt 12 with a hexagon hole has a tool contact portion 12a for contacting with a tool such as the hexagonal wrench. The tool contact portion 12a is a portion for receiving a driving force for contacting with both the supporting member 30 and the housing 20 from the outside by a contact force, and constitutes a contact driving force receiving portion according to this invention. The tool contact portion 12a is disposed at a position not contacting with the lubricant 131 a when the housing 20 is fixed to the arm 113.

Next, the assembling method of the lubricant deterioration sensor 139a will be explained. Although the explanation is made hereinafter as to the lubricant deterioration sensor 139b, the configuration of each of the lubricant deterioration sensors such as the lubricant deterioration sensors 137a, 137b, 139a other than the lubricant deterioration sensor 139b is substantially same.

First, adhesive is pasted on the surface plane of the prism housing portion 41 of the holder 40 to be made in contact with the light incident surface 61 a of the right-angle prism 61, and also adhesive is pasted on the two surface planes of the right-angle prism 61 to be made in contact with the two walls 41 a of the prism housing portion 41. Then, the right-angle prism 61 is fixed to the prism housing portion 41 by the adhesive. Further, adhesive is pasted on the surface plane of the prism housing portion 42 of the holder 40 to be made in contact with the light emission surface 62c of the right-angle prism 62, and also adhesive is pasted on the two surface planes of the right-angle prism 62 to be made in contact with the two walls 42a of the prism housing portion 42. Then, the right-angle prism 62 is fixed to the prism housing portion 42 by the adhesive. Furthermore, the white LED 72 is fixed to the LED housing portion 43 of the holder 40 by means of adhesive.

Then, the circuit board 71 mounting the RGB sensor 73 thereon is fixed to the holder 40 by means of the screws 11, and the white LED 72 is fixed to the circuit board 71 by means of soldering. Further, various kinds of electronic components such as the connector 78 are assembled, thereby supporting the electronic component group 70 by the holder 40.

Next, the holder cap 50 is fixed to the holder 40 by means of the bolts 13 with hexagon holes.

Lastly, the holder 40 attached with the O ring 15 is fixed, by means of the bolts 12 with hexagon holes, to the holder housing portion 23 of the housing 20 attached with the O ring 14 and the O ring 16.

Next, the explanation will be made as to a method of mounting the lubricant deterioration sensor 139b to the arm 113. Although the explanation is made hereinafter as to the lubricant deterioration sensor 139b, the configuration of each of the lubricant deterioration sensors such as the lubricant deterioration sensors 137a, 137b, 139a other than the lubricant deterioration sensor 139b is substantially same.

First, the tool contact portion 22 of the housing 20 is grasped by a tool and the screw portion 21 of the housing 20 is threaded into the screw hole 113a of the arm 113, thereby fixing the lubricant deterioration sensor 139b to the arm 113.

Then, the connector 95 of the external device at the outside of the lubricant deterioration sensor 139b is connected to the connector 78.

Next, the operation of the industrial robot 100 will be explained.

First, the operation of the articular portion 130 will be explained. Hereinafter, although the explanation is made as to the articular portion 130, the operation of each of the articular portions 120 and 140 to 170 is substantially same.

When the output shaft of the motor 138 of the articular portion 130 rotates, the rotation force of the motor 138 is reduced by the reducer 131, to thereby move the arm 113 fixed to the supporting body 134 of the recorder 131 with respect to the arm 112 fixed to the case 133 of the reducer 131.

Next, the operation of the lubricant deterioration sensor 139b will be explained. Although the explanation is made hereinafter as to the lubricant deterioration sensor 139b, the configuration of each of the lubricant deterioration sensors such as the lubricant deterioration sensors 137a, 137b, 139a other than the lubricant deterioration sensor 139b is substantially same.

The lubricant deterioration sensor 139b emits white light from the white LED 72 in response to electric power supplied from the external device via the connector 78.

Then, the lubricant deterioration sensor 139b outputs light amounts of respective colors RGB of the light received by the RGB sensor 73 as an electric signal to the external device via the connector 78.

The lubricant deterioration sensor 139b may additionally mount another sensor other than the RGB sensor 73. For example, in the lubricant deterioration sensor 139b, when a temperature sensor for detecting the temperature of the lubricant 131 a is contained in the electronic component group 70, the temperature detected by the temperature sensor can also be outputted as an electric signal to the external device via the connector 78.

Next, the explanation will be made as to a method of adjusting the direction of the opening 60b of the oil gap 60a of the lubricant deterioration sensor 139b. Although the explanation is made hereinafter as to the lubricant deterioration sensor 139b, the configuration of each of the lubricant deterioration sensors such as the lubricant deterioration sensors 137a, 137b, 139a other than the lubricant deterioration sensor 139b is substantially same.

The external device of the lubricant deterioration sensor 139b can specify the kinds and amounts of the contaminant within the lubricant 131a of the reducer 131 based on the colors detected by the RGB sensor 73. That is, the lubricant deterioration sensor 139b can detect the deterioration degree of the lubricant 131 a by detecting the colors of the contaminant within the lubricant 131 a.

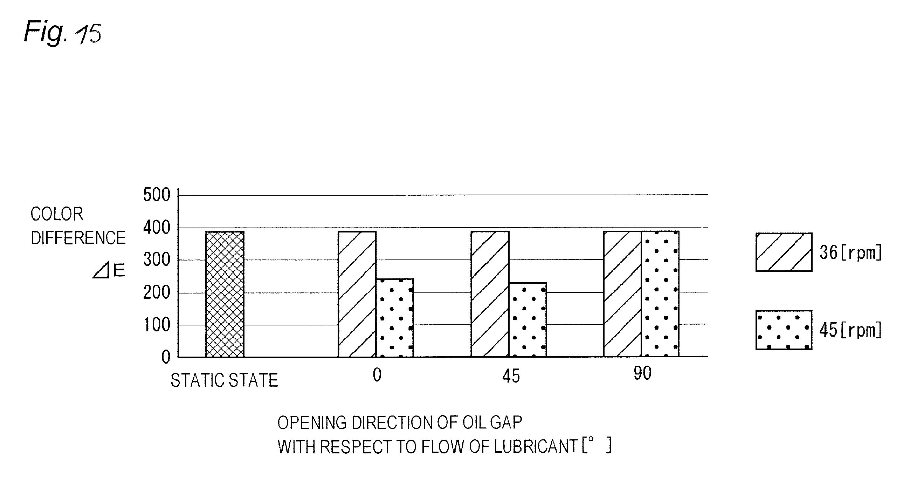

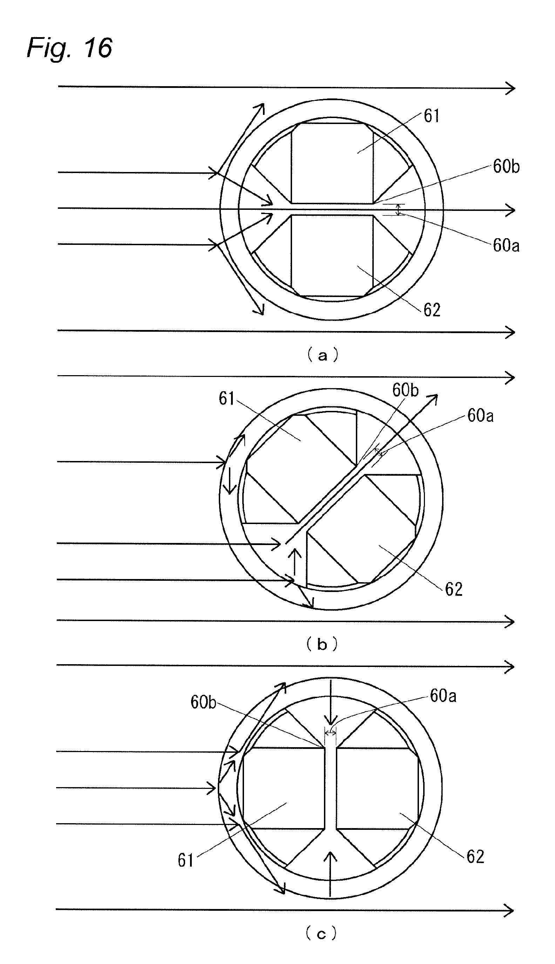

Fig. 15 is a diagram showing an example of the relation between the direction of the opening 60b of the oil gap 60a with respect to the flow of the lubricant 131a and a color difference $\Delta E$ of the colors detected by the RGB sensor 73 with respect to black. Fig. 16(a) is a diagram showing a state that the direction of the opening 60b of the oil gap 60a with respect to the flow of the lubricant 131 a is 0 degree. Fig. 16(b) is a diagram showing a state that the direction of the opening 60b of the oil gap 60a with respect to the flow of the lubricant 131 a is 45 degrees. Fig. 16(c) is a diagram showing a state that the direction of the opening 60b of the oil gap 60a with respect to the flow of the lubricant 131 a is 90 degrees.

The color difference $\Delta E$ of the colors detected by the RGB sensor 73 with respect to black can be calculated by an expression shown by the following Math. 1 by using the respective values of the colors RGB detected by the RGB sensor 73.

[Math. 1]

$$\Delta E = \sqrt{R^2 + G^2 + B^2}$$

In the experiment where the relation shown in Fig. 15 was derived, new oil with a low deterioration degree was used as the lubricant 131 a.

Further, in Fig. 15, a "static state" represents a time period where the flow of the lubricant 131 a stops. When the flow of the lubricant 131 a stops, the direction of the opening 60b of the oil gap 60a with respect to the flow of the lubricant 131a does not influence on the $\Delta E$ of the colors detected by the RGB sensor 73 with respect to black. Thus, the $\Delta E$ of the colors detected by the RGB sensor 73 with respect to black in the "static state" becomes a determination criterion of the relation between the direction of the opening 60b of the oil gap 60a with respect to the flow of the lubricant 131a and the color difference $\Delta E$ of the colors detected by the RGB sensor 73 with respect to black.

Further, in Fig. 15, each of 36 [rpm] and 45 [rpm] represents the rotation speed of the arm 113 with respect to the arm 112 as a revolution number per one minute. Since the lubricant deterioration sensor 139b is attached to the arm 113, this sensor moves within the lubricant 131 a in accordance with the rotation of the arm 113 with respect to the arm 112. Since the lubricant deterioration sensor 139b is attached to the arm 113, this sensor moves within the lubricant 131 a in accordance with the rotation of the arm 113 with respect to the arm 112. In other words, each of 36 [rpm] and 45 [rpm] indirectly represents the speed of the flow of the lubricant 131 a with respect to the lubricant deterioration sensor 139b.

In Fig. 16, arrows other than those representing the oil gap 60a represent the flow of the lubricant 131 a.

The detection accuracy of the deterioration of the lubricant 131a can be determined by the color difference $\Delta E$

of the colors detected by the RGB sensor 73 with respect to black. In other words, in Fig. 15, the detection accuracy of the deterioration of the lubricant 131 a degrades in a case that the rotation speed of the arm 113 with respect to the arm 112 is 45 [rpm] and the direction of the opening 60b of the oil gap 60a with respect to the flow of the lubricant 131 a is 0 degree or 45 degrees. In this manner, the detection accuracy of the deterioration of the lubricant 131a degrades depending on the direction of the opening 60b of the oil gap 60a with respect to the flow of the lubricant 131 a.

The lubricant deterioration sensor 139b is configured to be adjustable in the direction of the opening 60b of the oil gap 60a.

First, each of the bolts 12 with hexagon holes is loosened by a tool inserted into the tool contact portion 12a so that the supporting member 30 becomes rotatable with respect to the housing 20.

Then, in a state that the rotation of the housing 20 with respect to the arm 113 is prevented by grasping the tool contact portion 22 of the housing 20 by the tool, the supporting member 30 is rotated with respect to the housing 20 by the tool inserted into the tool contact portion 51. The direction of the opening 60b of the oil gap 60a changes in accordance with the rotation of the supporting member 30 with respect to the housing 20.

Lastly, each of the bolts 12 with hexagon holes is fastened by the tool inserted into the tool contact portion 12a so that the rotation of the supporting member 30 becomes impossible with respect to the housing 20.

As explained above, since the RGB sensor 73 detects colors with respect to the light having wavelengths not absorbed by the contaminant within the lubricant 131 a at the oil gap 60a among the white light emitted by the white LED 72, each of the lubricant deterioration sensors such as the lubricant deterioration sensor 139b can immediately detect the colors of the contaminant within the lubricant 131 a of the reducer 131. That is, each of the lubricant deterioration sensors can immediately specify the kinds and amounts of the contaminant within the lubricant 131a of the reducer 131 based on the colors detected by the RGB sensor 73, by using the external device such as a computer. Each of the lubricant deterioration sensors may be configured that the electronic component group 70 contains an electronic component which specifies the kinds and amounts of the contaminant within the lubricant based on the colors detected by the RGB sensor 73.

Generally, in the industrial robot, accuracy of the track of the arm etc. largely varies depending on the performance of the reducer used at the articular portion. Thus, it is important to suitably exchange the reducer for the industrial robot for new one when the performance of the reducer degrades. However, in the case of exchanging the reducer for the industrial robot, it is required to stop the industrial robot provided with this reducer for the industrial robot and a production line mounting the industrial robot. Thus, in order to grasp the exchange time of the reducer for the industrial robot, it is very important to suitably predict a failure of the reducer for the industrial robot. In this respect, as described above, each of the lubricant deterioration sensors of the industrial robot 100 can immediately specify the kinds and amounts of the contaminant within the lubricant 131 a of the reducer 131 based on the colors detected by the RGB sensor 73, by using the external device such as a computer. Thus, the industrial robot 100 and each of the reducers of the industrial robot 100 can predict a failure.

To the lubricant 131 a, there is sometimes added various kinds of additive such as friction reducing agent like organic molybdenum such as MoDTC or MoDTP for reducing the friction of a friction surface, extreme-pressure additive such as SP-based additive for improving extreme-pressure lubricity representing the performance for suppressing the sticking of the friction surface, and dispersing agent such as calcium sulfonate for suppressing the generation and adhesion of sludge. These additives are separated from the lubricant 131a in accordance with the deterioration of the lubricant 131 a in such a manner that the additive adheres to, binds with or settles on the metal surface of the industrial robot 100 and the reducer. Each of the lubricant deterioration sensors can specify, based on the detected colors, not only an amount of ion powder within the lubricant 131 a but also a deterioration degree of the base oil and increase of the contaminant such as sludge due to the reduction of various kinds of additive added to the lubricant 131 a. Thus, each of the industrial robot 100 and the reducers of the industrial robot 100 can improve the prediction accuracy of a failure as compared with a technique where a failure of the reducer is predicted only based on a density of iron powder.

It is preferable that the lubricant 131a does not contain molybdenum such as MoDTC or MoDTP as the additive.

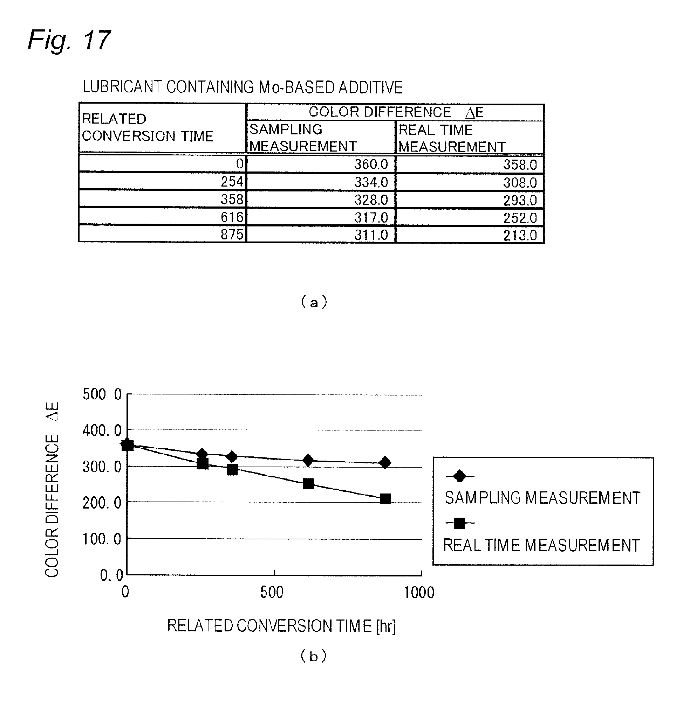

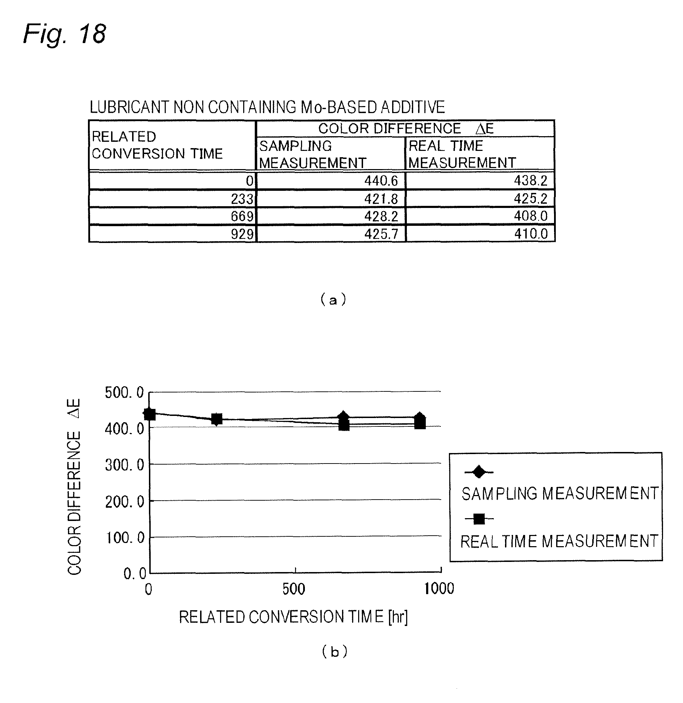

As described above, in order to investigate whether or not molybdenum contained in the lubricant 131 a as the additive is a cause of the degradation of the performance of the lubricant deterioration sensor, the inventors of the present application have performed the comparative experimentation as to the degradation of the performance of the lubricant deterioration sensor between the lubricant 131 a containing molybdenum as the additive and the lubricant 131 a not containing molybdenum as the additive. In a device for the experimentation prepared so as to have the substantially same configuration as the articular portion 130, under a condition that the maximum output rotation speed was 15 rpm, the maximum load torque was 2.5 times as large as the rated torque of the reducer 131 and a load moment was the rated moment of the reducer 131, this experimentation was performed in a manner that a reciprocal rotation movement that the supporting body 134 was rotated by 45 degrees in a reverse direction with respect to the case 133 after rotating the supporting body by 45 degrees in a forward direction with respect to the case was repeatedly continued. The lubricant used in this experimentation as the lubricant 131 a containing molybdenum as the additive contains organic molybdenum as the friction reducing agent, the extreme-pressure additive, the dispersing agent and antioxidant each in a rage of 0.1 % to 10% as the additive. As compared with the lubricant used in this experimentation as the lubricant 131a containing molybdenum as the additive, the lubricant used in this experimentation as the lubricant 131a not containing molybdenum as the additive differs only in a point that the organic molybdenum as the friction reducing agent is not contained. The results of this experimentation are shown in Figs. 17 and 18.

Fig. 17(a) is a table showing the experimentation result of the chorological change of the difference ΔE in a case where the lubricant 131 a contains molybdenum as the additive. Fig. 17(b) is a graph of the experimentation result shown in Fig. 17(a). Fig. 18(a) is a table showing the experimentation result of the chorological change of the difference ΔE in a case where the lubricant 131a does not contain molybdenum as the additive. Fig. 18(b) is a graph of the experimentation result shown in Fig. 18(a).

In Figs. 17 and 18, a rated conversion time was obtained in a manner that a time period during which the device for the experimentation was actually driven was converted into a time period of a case that the output rotation speed is 15 rpm and the load torque is the rated torque of the reducer 131, based on the output rotation speed and the load torque of the reducer 131 in a case where the device for the experimentation was actually driven. The life time of the reducer 131 is defined as 6,000 hours in a case where the reducer 131 is continuously driven under a condition that the output rotation speed is 15 rpm and the load torque is the rated torque of the reducer 131. Further, the sampling measurement was performed in a manner that the lubricant 131 a was drained from the device for the experimentation each time of the measurement, and a color difference ΔE of the colors of the lubricant 131a drained from the device for the experimentation with respect to black was measured by using a lubricant deterioration sensor like the lubricant deterioration sensor 139b. Further, the real time measurement was performed in a manner that the color difference ΔE of the colors of the lubricant 131a within the device for the experimentation with respect to black was measured by using the lubricant deterioration sensor 139b attached to the device for the experimentation.

Since the right-angle prisms of the gap forming member of the lubricant deterioration sensor used at the time of the sampling measurement are made in contact with the lubricant 131 a only at the time of the measurement, sludge generated by the deterioration of the lubricant 131 a does not adhere to the prisms. Thus, the experimentation result of the sampling measurement represents the state of the lubricant 131a quite precisely.

On the other hand, since the right-angle prisms 61, 62 of the gap forming member 60 of the lubricant deterioration sensor 139b used at the time of the real time measurement are always made in contact with the lubricant 131 a, sludge generated by the deterioration of the lubricant 131 a adheres to the prisms. Thus, the experimentation result of the real time measurement is influenced by the sludge adhered to the right-angle prisms 61, 62.

Therefore, a difference between the experimentation result of the sampling measurement and the experimentation result of the real time measurement represents a degree of the influence of the sludge adhered to the right-angle prisms 61,62.

As shown in Figs. 17 and 18, as compared with the case where the lubricant 131a contains molybdenum as the additive, when the lubricant 131a does not contain molybdenum as the additive, the difference between the experimentation result of the sampling measurement and the experimentation result of the real time measurement is small even if the experimentation time periods are substantially same therebetween. In other words, it is clear that this case is less influenced by the sludge adhered to the right-angle prisms 61, 62.

As explained above, when the lubricant 131 a does not contain molybdenum as the additive, each of the industrial robot 100 and the reducers of the industrial robot 100 can prevent a phenomenon that molybdenum adheres to the right-angle prisms of the gap forming member as the sludge. Thus, generation of the adhesion of the sludge to the right-angle prisms of the gap forming member can be suppressed and hence the degradation of the performance of the lubricant deterioration sensor can be suppressed. As a result, each of the industrial robot 100 and the reducers of the industrial robot 100 can prevent the degradation of the performance of the lubricant deterioration sensor which can immediately specify the kinds and amounts of the contaminant within the lubricant 131 a.

Further, in each of the lubricant deterioration sensors such as the lubricant deterioration sensor 139b, the housing 20 supports the supporting member 30 so as to be rotatable so that the direction of the opening 60b of the oil gap 60a changes when the supporting member 30 rotates. Thus, in a case where the housing 20 is fixed to the industrial robot 100, the direction of the opening 60b of the oil gap 60a at the time of fixing the housing 20 to the industrial robot 100 can be adjusted so that the detection accuracy of the deterioration of the lubricant 131 a of the industrial robot 100 becomes high. As a result, each of the industrial robot 100 and the reducers of the industrial robot 100 can predict a failure with a high accuracy.

Further, in each of the lubricant deterioration sensors such as the lubricant deterioration sensor 139b, the supporting member 30 includes the tool contact portion 51, as the portion for receiving the rotational driving force with respect to the housing 20 from the outside by the contact force, at a position not contacting with the lubricant 131a when the housing 20 is fixed to the industrial robot 100. Thus, in each of the lubricant deterioration sensors, after the housing 20 is fixed to the industrial robot 100, the direction of the opening 60b of the oil gap 60a at the time of fixing the housing 20 to the industrial robot 100 can be adjusted so that the detection accuracy of the deterioration of the lubricant 131 a of the industrial robot 100 becomes high.

Furthermore, in each of the lubricant deterioration sensors such as the lubricant deterioration sensor 139b, each of the bolts 12 with hexagon holes, configured so as to prevent the rotation of the supporting member 30 with respect to the housing 20 by contacting with both the supporting member 30 and the housing 20, includes the tool contact portion 12a, as the portion for receiving the driving force for contacting with both the supporting member 30 and the housing 20 from the outside by the contact force, at the position not contacting with the lubricant 131 a when the housing 20 is fixed to the industrial robot 100. Thus, in each of the lubricant deterioration sensors, after the housing 20 is fixed to the industrial robot 100, the direction of the opening 60b of the oil gap 60a at the time of fixing the housing 20 to the industrial robot 100 can be fixed so that the detection accuracy of the deterioration of the lubricant 131 a of the industrial robot 100 becomes high.

Furthermore, in each of the lubricant deterioration sensors, since the light emitting element is the white LED for emitting white light, the sensor can be miniaturized as compared with a configuration where the light emitting element is a lamp other than an LED, for example. Thus, each of the industrial robot 100 and the reducers of the industrial robot 100 can be miniaturized. The light emitting element according to this invention may be one other than the white LED. For example, the light emitting element may be a lamp other than an LED. Further, the light emitting element may be configured to include a red LED or a red lamp other than an LED, a green LED or a green lamp other than an LED and a blue LED or a blue lamp other than an LED, to thereby emit white light by composing light of respective colors emitted from these LEDs or these lamps other than LEDs.

Furthermore, in each of the lubricant deterioration sensors, the gap forming member 60 is provided with the light reflection surfaces 61b, 62b for bending the optical path 10a. Thus, as compared with the configuration where the optical path 10a from the white LED 72 to the RGB sensor 73 is straight, the entire configuration can be miniaturized by disposing the white LED 72 and the RGB sensor 73 close to each other. Furthermore, in each of the lubricant deterioration sensors, the gap forming member 60 has a function of bending the optical path 10a as well as a function of forming the oil gap 60a. Thus, the number of the components can be reduced as compared with a configuration where a member for bending the optical path 10a is separately provided in place of the gap forming member 60. As a result, each of the industrial robot 100 and the reducers of the industrial robot 100 can be miniaturized and also reduce the number of the components.

In particular, each of the lubricant deterioration sensors is configured in a manner that the gap forming member 60 is formed by the two right-angle prisms 61, 62 respectively provided with the light reflection surfaces 61 b, 62b each for bending the optical path 10a by 90 degrees, and that the optical path 10a is bent by 180 degrees by the light reflection surfaces 61 b, 62b of the two right-angle prisms 61, 62 and the oil gap 60a is formed between the two right-angle prisms 61, 62. Thus, the sensor can be miniaturized with the simple configuration having a small number of the components. As a result, each of the industrial robot 100 and the reducers of the industrial robot 100 can be miniaturized with the simple configuration having the small number of the components.

Furthermore, each of the lubricant deterioration sensors is configured in a manner that the sensor has the holder 40 surrounding at least a part of the optical path 10a and the surface of the holder 40 is treated to the treatment for preventing light reflection. Thus, the RGB sensor 73 can be prevented from receiving unnecessary reflection light. As a result, as compared with a configuration where the RGB sensor 73 receives unnecessary reflection light, each of the lubricant deterioration sensors can improve the detection accuracy of the colors of the contaminant within the lubricant 131 a. Accordingly, each of the industrial robot 100 and the reducers of the industrial robot 100 can improve the prediction accuracy of a failure.

Furthermore, in each of the lubricant deterioration sensors, an oil repelling treatment may be performed on the surface planes of the gap forming member 60 forming the oil gap 60a, that is, the light emission surface 61 c of the right-angle prism 61 and the light incident surface 62a of the right-angle prism 62. In each of the lubricant deterioration sensors, when each of the light emission surface 61 c of the right-angle prism 61 and the light incident surface 62a of the right-angle prism 62 is treated to the oil repelling treatment, the lubricant 131a flows through the oil gap 60a easily. Thus, as compared with a configuration where the lubricant 131 a likely remains at the oil gap 60a, the detection accuracy of the colors of the contaminant within the lubricant 131 a can be improved. Furthermore, in each of the lubricant deterioration sensors, when each of the light emission surface 61 c of the right-angle prism 61 and the light incident surface 62a of the right-angle prism 62 is treated to the oil repelling treatment, dirt is unlikely adhered to each of the light emission surface 61 c of the right-angle prism 61 and the light incident surface 62a of the right-angle prism 62. Thus, the degradation of the detection accuracy of the colors of the contaminant within the lubricant 131 a due to the adhesion of dirt can be suppressed. As a result, each of the industrial robot 100 and the reducers of the industrial robot 100 can improve the prediction accuracy of a failure.

The prediction accuracy of a failure of the reducer can be improved by jointly using the lubricant deterioration sensor according to this invention, the temperature sensor for measuring the temperature of the lubricant and a monitoring mechanism for a current value of the motor etc.

Although each of the right-angle prisms 61, 62 of the gap forming member 60 is made of glass in this embodiment, each of them may be formed by material other than glass such as silicon resin. When each of the prisms 61, 62 is formed by silicon resin, dirt can be unlikely adhered to the surface planes thereof forming the oil gap 60a.

Although the gap forming member 60 is configured by the two right-angle prisms 61, 62 in this embodiment, the gap forming member may be configured by three or more prisms.

In each of the lubricant deterioration sensors, the white LED 72 and the RGB sensor 73 may be configured in an arrangement other than that explained in this embodiment. For example, in each of the lubricant deterioration sensors, the optical path 10a from the white LED 72 to the RGB sensor 73 may be straight

Further, in each of the lubricant deterioration sensors, the optical path 10a may be bent by employing a configuration other than the right-angle prisms.

In each of the lubricant deterioration sensors, for example, a battery such as a battery cell may be used as an electric power supply means, and a wireless communication may be employed as a means for outputting the detection result to the external device.

Further, the mounting position of each of the lubricant deterioration sensors is not limited to that shown in this embodiment, and preferably may be set suitably according to the usage etc. of the industrial robot 100.

Although the industrial robot is used in the embodiment as the machine according to this invention, the machine other than the industrial robot may be used.

The present application is based on Japanese Patent Application (Japanese Patent Application No. 2011-287000) filed on December 27, 2011, the content of which is incorporated herein by reference.

Industrial Applicability

According to this invention, the machine is provided which can suppress the degradation of performance of the lubricant deterioration sensor that can immediately specify the kinds and amounts of the contaminant within the lubricant.

Reference Signs List

| | |
|---|---|
| 10a | optical path |
| 12 | bolt with hexagon hole (rotation preventing member) |
| 12a | tool contact portion (contact driving force receiving portion) |
| 20 | housing (fixing member) |
| 30 | supporting member |
| 40 | holder (optical path surrounding portion) |
| 51 | tool contact portion (rotational driving force receiving portion) |
| 60 | gap forming member |
| 60a | oil gap |
| 60b | opening |
| 61 | right-angle prism |
| 61b | light reflection surface |
| 61c | light emission surface (surface plane forming oil gap) |
| 62 | right-angle prism |
| 62a | light incident surface (surface plane forming oil gap) |
| 62b | light reflection surface |
| 72 | white LED (light emitting element) |
| 73 | RGB sensor (color light reception element) |
| 100 | industrial robot (machine) |
| 112 - 116 | arm |
| 120, 130, 140, 150, 160, 170 | articular portion |
| 131 | reducer |
| 131a | lubricant |
| 137a, 137b, 139a, 139b | lubricant deterioration sensor |

Claims

1.  A machine configured to detect deterioration of lubricant, comprising:

    a machine body;

lubricant for reducing friction generated at a movable portion of the machine body; and
a lubricant deterioration sensor which is mounted in the machine body and configured to detect deterioration of the lubricant,
wherein the lubricant deterioration sensor includes:

a light emitting element configured to emit light;
a color light reception element configured to detect color of received light; and
a gap forming member forming an oil gap being a gap in which the lubricant enters,

wherein the gap forming member transmits the light emitted from the light emitting element,
wherein the oil gap is disposed on an optical path from the light emitting element to the color light reception element, and
the lubricant does not contain molybdenum as additive.

2. The machine according to claim 1, wherein
the lubricant deterioration sensor further includes: a supporting member supporting the light emitting element, the color light reception element and the gap forming member; and a fixing member to be fixed to the machine body, and the fixing member supports the supporting member so as to be rotatable so that a direction of an opening of the oil gap changes when the supporting member rotates.

3. The machine according to claim 2, wherein
the supporting member includes a rotational driving force receiving portion which is a portion for receiving a rotational driving force with respect to the supporting member from outside by a contact force, at a position where the rotational driving force receiving portion does not contact with the lubricant in a state where the fixing member is fixed to the machine body.

4. The machine according to claim 2 or 3, wherein
the lubricant deterioration sensor further includes: a rotation preventing member preventing a rotation of the supporting member with respect to the fixing member by contacting with both the supporting member and the fixing member, and
the rotation preventing member includes a contact driving force receiving portion which is as a portion for receiving a driving force for contacting with both the supporting member and the fixing member from outside by a contact force, at a position where the contact driving force receiving portion does not contact with the lubricant in a state where the fixing member is fixed to the machine body.

5. The machine according to any one of claims 1 to 4, wherein
the light emitting element is a white LED which emits white light.

6. The machine according to any one of claims 1 to 5, wherein
the gap forming member has a reflection surface for bending the optical path.

7. The machine according to claim 6, wherein
the gap forming member includes two right-angle prisms each provided with the reflection surface for bending the optical path by 90 degrees, the optical path being bent by 180 degrees by the reflection surfaces of the two right-angle prisms, and
the oil gap is formed between the two right-angle prisms.

8. The machine according to any one of claims 2 to 7, wherein
the supporting member has an optical path surrounding portion which surrounds at least a part of the optical path, and
the optical path surrounding portion has a surface which is treated for preventing light reflection.

9. The machine according to any one of claims 1 to 8, wherein a surface of the gap forming member forming the oil gap is treated to an oil repelling treatment.

10. The machine according to any one of claims 1 to 9, wherein the machine is an industrial robot,
the machine body includes an arm and a reducer used at an articular portion of the arm, and
the lubricant is lubricant for the reducer.

Fig. 1

*Fig. 2*

*Fig. 3*

Fig. 4

*Fig. 5*

（a）

（b）

## Fig. 6

(a)

(b)

*Fig. 7*

20

24

22            22

21

(a)

20

26

24            24

22            22

23

25

21

(b)

*Fig. 8*

（a）

（b）

## Fig. 9

40

49

(a)

40

48 — — 48

47 — — 47

44

43

46

49

45

42 — — 41
42a — — 41a

(b)

*Fig. 10*

40

49
41
41a

( a )

40

48                    48
47                    47

49

42
42a

( b )

*Fig. 11*

( a )

( b )

*Fig. 12*

*Fig. 13*

50

（ a ）

50

52    51

53                    53

（ b ）

*Fig. 14*

(a)

(b)

EP 2 799 839 A1

*Fig. 15*

COLOR
DIFFERENCE

ΔE

500
400
300
200
100
0

STATIC STATE          0          45          90

OPENING DIRECTION OF OIL GAP
WITH RESPECT TO FLOW OF LUBRICANT [° ]

36 [rpm]

45 [rpm]

## Fig. 16

(a)

(b)

(c)

## Fig. 17

LUBRICANT CONTAINING Mo-BASED ADDITIVE

| RELATED CONVERSION TIME | COLOR DIFFERENCE ΔE | |
|---|---|---|
| | SAMPLING MEASUREMENT | REAL TIME MEASUREMENT |
| 0 | 360.0 | 358.0 |
| 254 | 334.0 | 308.0 |
| 358 | 328.0 | 293.0 |
| 616 | 317.0 | 252.0 |
| 875 | 311.0 | 213.0 |

(a)

(b)

## Fig. 18

LUBRICANT NON CONTAINING Mo-BASED ADDITIVE

| RELATED CONVERSION TIME | COLOR DIFFERENCE ΔE | |
|---|---|---|
| | SAMPLING MEASUREMENT | REAL TIME MEASUREMENT |
| 0 | 440.6 | 438.2 |
| 233 | 421.8 | 425.2 |
| 669 | 428.2 | 408.0 |
| 929 | 425.7 | 410.0 |

(a)

(b)

**INTERNATIONAL SEARCH REPORT**

| International application No. |
| --- |
| PCT/JP2012/083159 |

A. CLASSIFICATION OF SUBJECT MATTER
*G01N21/27*(2006.01)i

According to International Patent Classification (IPC) or to both national classification and IPC

B. FIELDS SEARCHED

Minimum documentation searched (classification system followed by classification symbols)
G01N21/27

Documentation searched other than minimum documentation to the extent that such documents are included in the fields searched
Jitsuyo Shinan Koho     1922–1996     Jitsuyo Shinan Toroku Koho     1996–2013
Kokai Jitsuyo Shinan Koho     1971–2013     Toroku Jitsuyo Shinan Koho     1994–2013

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 11-235097 A  (Hitachi, Ltd.),<br>27 August 1999 (27.08.1999),<br>entire text; all drawings<br>(Family: none) | 1-10 |
| A | JP 7-146233 A  (Shimadzu Corp.),<br>06 June 1995 (06.06.1995),<br>entire text; all drawings<br>(Family: none) | 1-10 |
| A | JP 5-223729 A  (Idemitsu Kosan Co., Ltd.),<br>31 August 1993 (31.08.1993),<br>entire text; all drawings<br>(Family: none) | 1-10 |

[X] Further documents are listed in the continuation of Box C.     [ ] See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    15 February, 2013 (15.02.13) | Date of mailing of the international search report<br>    05 March, 2013 (05.03.13) |
| --- | --- |
| Name and mailing address of the ISA/<br>    Japanese Patent Office | Authorized officer |
| Facsimile No. | Telephone No. |

Form PCT/ISA/210 (second sheet) (July 2009)

## INTERNATIONAL SEARCH REPORT

International application No.

PCT/JP2012/083159

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2010-230412 A  (Color Techno System Corp.), 14 October 2010 (14.10.2010), entire text; all drawings (Family: none) | 1-10 |
| A | JP 6-34541 A  (Nippon Oil Co., Ltd.), 08 February 1994 (08.02.1994), entire text; all drawings (Family: none) | 1-10 |
| A | JP 2008-45918 A  (NTN Corp.), 28 February 2008 (28.02.2008), entire text; all drawings (Family: none) | 1-10 |
| Y | JP 2011-26591 A  (Toyota Central Research and Development Laboratories, Inc.), 10 February 2011 (10.02.2011), entire text; all drawings & US 2011/0021390 A1 | 1-10 |
| Y | JP 2005-156297 A  (Nissan Motor Co., Ltd.), 16 June 2005 (16.06.2005), entire text; all drawings (Family: none) | 2-4 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 7146233 A
- JP 10104160 A
- JP 2004339411 A
- JP 2010024355 A
- JP 2011287000 A

### Non-patent literature cited in the description

- **TOMOHIKO YAMAGUCHI.** METHOD OF DISCRIMINATING HUE OF CONTAMINANT WITHIN LUBRICANT. *Fukui University, Faculty of Engineering, Research Report,* March 2003, vol. 51 (1), 81-81
- **TOMONORI HONDA.** DETERIORATION DIAGNOSIS OF LUBRICANT INSPECTION TECHNOLOGY. *Journal of Japan Society for Precision Engineering,* 2009, vol. 75 (3), 359-362